# EUROPÄISCHE PATENTSCHRIFT

(11) **EP 0 407 703 B1**
(45) Veröffentlichungstag und Bekanntmachung des Hinweises auf die Patenterteilung: **02.11.1994**
(21) Anmeldenummer: 90109043.1
(22) Anmeldetag: 14.05.1990
(51) Int. Cl.: B66F 9/07, B65G 1/04

(54) **Verfahren und Vorrichtung zur Aus- und Einlagerung von stangen- oder plattenförmiges Material enthaltenden Kassetten bei einem Regallager**
Method and device for storing and destoring cassettes containing bar or plate-shaped material in a shelf store
Procédé et dispositif pour stocker et déstocker des caissons contenant des matériaux en forme de bâton ou de plaque dans un magasin à rayonnage

(30) Priorität: 12.07.1989 DE 3922964
(43) Veröffentlichungstag der Anmeldung: 16.01.1991
(73) Patentinhaber: KEURO Besitz GmbH & Co. EDV-Dienstleistungs KG, D-77855 Achern-Gamshurst (DE)
(72) Erfinder: Stolzer, Armin,, D-7592 Renchen (DE); Blust, Rudolf,, D-7591 Sasbach-Obersasbach (DE)
(74) Vertreter: Lemcke, Rupert, Dipl.-Ing.

(56) Entgegenhaltungen:
- EP-A- 0 268 965
- DE-A- 3 403 244
- DE-A- 3 708 401

## Beschreibung

Die Erfindung betrifft ein Verfahren zur Aus- und Ein- bzw. Rücklagerung von Stangen- oder plattenförmiges Material enthaltenden Kassetten bei einem Regallager mit quer zur Materiallängsrichtung fluchtend nebeneinander angeordneten, durch Regalgänge getrennten Regalen, die übereinander Regalfächer für die Kassetten aufweisen, wobei die Kassetten durch ein Regalbediengerät zwischen den Regalfächern und einem die untersten Regalfächer quer zur Materiallängsrichtung unterfahrenden Transportwagen mit wenigstens zwei nebeneinander angeordneten Kassettenplätzen gefördert werden, der sie einer Auslager- oder Füllstation zuführt und von dort wieder zur Einlagerung in ein Regal zurückbringt, wobei einer der Kassettenplätze des Transportwagens Längsfördermittel zum Kassettenwechsel zwischen Auslager- oder Füllstation und Transportwagen aufweist sowie die auszulagernde Kassette nach ihrer Entnahme aus dem zugeordneten Regalfach auf einen freien Platz des Transportwagens abgesetzt wird.

In Verbindung mit diesem Verfahren betrifft die Erfindung weiterhin ein Regallager für in selbsttragenden Kassetten aufgenommenes stangen- oder plattenförmiges Material mit mehreren quer zur Materiallängsrichtung fluchtend nebeneinander angeordneten und durch Regalgängen voneinander getrennten Regalen, die übereinander an vertikalen Regalstützen befestigte, sich horizontal quer zur Materiallängsrichtung in den benachbarten Regalgang erstreckende Tragarme zur Bildung von Regalfächern für die Kassetten und dabei für den Eingriff in die stirnseits vorstehenden Auflagen der Kassetten aufweisen, ferner mit einem oberhalb bzw. seitlich der Regale quer zur Materiallängsrichtung verfahrbaren Regalbediengerät, durch das die Auflagen der Kassetten stirnseitig untergreifbar sowie die Kassetten quer zu den Regalgängen und in diesen auf- und abbewegbar sind, weiterhin mit einem unterhalb der untersten Regalfächer quer zur Materiallängsrichtung verfahrbaren Transportwagen zur Aufnahme wenigstens zweier nebeneinander angeordneter Kassetten, sowie schließlich mit mindestens einer in Materiallängsrichtung neben den Regalen auf der Höhe des Transportwagens angeordneten Auslagerstation zur gleichzeitigen Aufnahme zweier nebeneinander angeordneter Kassetten, wobei ein Kassettenplatz des Transportwagens sowie beide Kassettenplätze der Auslagerstation als in Materiallängsrichtung betätigbare, horizontale Längsfördermittel für die Kassetten ausgebildet sind.

Ein Verfahren sowie ein Regallager der vorstehend angegebenen Gattung sind aus der DE-OS 37 08 401 bekannt. Dort wird jedoch die einzulagernde bzw. rückzulagernde Kassette mit Hilfe des Transportwagens zunächst zur Aufnahme der nächstfolgend auszulagernden Kassette an deren Bereitstellungsplatz verbracht, es wird dann diese nächstfolgende Kassette auf dem Transportwagen abgesetzt, anschließend der Transportwagen an die Position überführt, von der aus die einzulagernde Kassette an ihren ursprünglichen Regalplatz mit Hilfe des Regalbediengerätes nach Aufnahme vom Transportwagen gebracht werden kann, und es wird schließlich der Transportwagen mit der als nächstes auszulagernden Kassette in deren Positon zur Übergabe auf die Auslagerstation verfahren.

Diese Vorgehensweise ist äußerst umständlich und zeitraubend. Sie fordert grundsätzlich das Hin- und Herfahren des Transportwagens zwischen einer Position zur Aufnahme der als nächstes auszulagernden Kassette einerseits und der Abgabe der aus der vorhergehenden Bearbeitung einzulagernde Kassette andererseits, wobei gleichzeitig entsprechend das Regalbediengerät für beide Positionen durch entsprechende Fahrbewegungen bereitgestellt werden muß, um bei Anhalten des Transportwagens einmal die als nächstes auszulagernde Kassette abzusetzen und zum anderen die wieder einzulagernde Kassette auf ihren ursprünglichen Platz zurückzubringen.

Durch die DE-A-3 403 244 ist andererseits ein Einschublager für Lagereinheiten wie Kleinbehälter, Kartons und dergleichen einer anderen Gattung bekannt, bei dem auf einer Ebene eines Regalbediengerätes ein Wechsel zwischen einem auszulagernden und einem einzulagernden Gegenstand vorgenommen wird, in den das Regalbediengerät als solches drei nebeneinander liegende Spuren für die zu behandelnden Gegenstände aufweist, die sich in Lagerrichtung hintereinander angeordnet mehrfach unterbringen lassen und auch nebeneinander in den dargestellten drei Spuren unterbringbar sind. Eine solche Bauform ist für den Gegenstand der eingangs genannten Gattung, also zur Handhabung von stangenförmigem oder plattenförmigem Material nicht anwendbar, da es eine erhebliche Längsausdehnung aufweist und in Kassetten angeordnet ist. Denn im bekannten Falle stehen die zu behandelnden Gebinde unmittelbar auf einer Ebene des Regalförderzeuges nebeneinander zum Austausch bzw. zum Wechsel zur Verfügung.

Aufgabe der Erfindung ist es, ein Verfahren sowie ein Regallager der eingangs genannten Art derart zu gestalten, daß unter erheblicher Ersparnis von Fahrzeiten insbesondere für den Transportwagen eine möglichst große Materialmenge verschiedener Materialarten in schneller bzw. kurzer Auslagerzeit auf der Auslagerstation zur Verfügung gestellt sein kann. Dabei soll unter weitestgehender Verwendung der bekannten Möglichkeiten und Einrichtungen durch im wesentlichen eine einfache und apparativ kostengünstige Maßnahme eine erhebliche Reduzierung der Fahrwege bzw. Fahrzeiten des Transportwagens für die Einlagerung bzw. Rücklagerung von Kassetten einerseits sowie die Auslagerung der jeweils nächstfolgenden Kassetten andererseits erreicht werden.

Ausgehend von einem Verfahren der eingangs genannten Art ist diese Aufgabe erfindungsgemäß dadurch gelöst, daß das Regalbediengerät anschließend nach entsprechender horizontaler Relativbewegung zwischen Regalbediengerät und Transportwagen die rückzulagernde Kassette von deren Platz auf den Transportwagen aufnimmt, und daß die rückzulagernde Kassette anschließend durch das Regalbediengerät an den Platz der vorher ausgelagerten Kassette gebracht wird.

Durch diese erfindungsgemäße Verfahrensweise ergibt sich als Kern der Erfindung die Möglichkeit, daß zwischen für den Kassettenwechsel stattfindender Fahrbewegung des Transportwagens einerseits und der damit in Verbindung stehenden Tätigkeit des Regalbediengerätes nur ein Treffpunkt innerhalb des Regallagers auftritt, bei dem gleichzeitig das Aufsetzen der als nächstes auszulagernden Kassette auf den Transportwagen stattfinden kann und bei der weiteren Fahrbewegung des Transportwagens in Richtung auf die Auslagerung dieser Kassette die einzulagernde Kassette in das Regalbediengerät kommen kann und von diesem quasi auf dem Weg des Transportwagens von diesem abgenommen werden kann, so daß der Transportwagen nach Aufnahme der als nächstes auszulagernden Kassette ohne eine bedeutende Unterbrechung der Fahrbewegung für die Auslagerung dieser Kassette auch zur Abgabe der einzulagernden Kassette an der dazu erforderlichen Bereitsstellungsposition vorbeikommen kann.

Ist dann die einzulagernde Kassette vom Transportwagen abgenommen, kann dieser seine Fahrbewegung zur Auslagerstation fortsetzen. Inzwischen kann das Regalbediengerät die einzulagernde Kassette auf den vorgesehen Platz bringen, um anschließend die für die nächste Auslagerung vorzusehende Kassette anzufahren und am dazu passenden Übergabeort für den Transportwagen bereitzustellen.

Durch die genannte Verfahrensweise ergibt sich zwar eine chaotische Lagerung der Kassetten, die jedoch im vorliegenden Falle äußerst sinnvoll ist und trotz der in dieser Form bisher nicht ausgeübten Weise zu einer Reduzierung der für den Kassettenwechesel erforderlichen Fahrzeiten bzw. -bewegungen von Transportwagen einerseits und Regalbediengerät andererseits auf ein absolutes Minimum führen kann mit der Folge, daß beide genannten Einrichtungen nicht nur im Zuge des Kassettenwechsels innerhalb der ohnehin notwendigen Fahrbewegungen glatt bzw. harmonisch miteinander spielen sondern auch in Begleitung des Kassettenwechsels nur solche Fahrbewegungen ausführen, die ohnehin notwendig sind bzw. die kürzest mögliche und einfachste Weiterbehandlung der Kassetten bedeuten.

Im wesentlichen ergibt sich also durch die erfindungsgemäße Verfahrensweise, daß Transportwagen und Regalbediengerät sich nur am Fuße eines Regalganges zu treffen brauchen, wo unter optimaler Ausnutzung der jeweils ohnehin erforderlichen Bewegungen der Kassettenwechsel schnellstmöglich und ohne solche Fahrbewegungen von Transportwagen und Regalbediengerät stattfinden kann, die nicht in den ohnehin erforderlichen Ablauf für den Kassettenwechsel passen.

Hat dann das Regalbediengerät eine einzulagernde Kassette an den Platz der als nächstes auszulagernden Kassette gebracht, ist es während der weiteren Arbeit des Transportwagens mit der Abgabe der auszulagernden Kassette und der Rückholung der als nächstes einzulagernden Kassette genügend frei, um die danach wiederum als nächstes auszulagernde Kassette aus irgendeinem Regalfach zu holen und am Fuße des diesem benachbarten Regalganges für den nächsten Kassettenwechsel bereitzuhalten.

Als Weiterbildung des Erfindungsgedankens, ist es vorteilhaft, daß die Kassetten bei der der Einlagerung dienenden Fahrt des Transportwagens auf einen neben dem Platz mit den Längsfördermitteln gelegenen Kassettenplatz umgesetzt werden, daß an dem durch die Gangposition der nächstfolgend auszulagernden Kassette bestimmten Ende dieser Fahrt die nächstfolgend auszulagernde Kassette auf den die Längsfördermittel aufweisenden Kassettenplatz des Transportwagens abgesetzt wird, und daß dann die einzulagernde Kassette vom Transportwagen abgenommen und in das durch die nächstfolgend auszulagernde Kassette frei gewordene Regalfach gebracht wird.

Durch diese Maßnahmen wird die vorstehend bereits im wesentlichen beschriebene Verfahrensweise äußerst unterstützt, indem eine optimale Vorbereitung für den Kassettenwechsel an der genannten Gangposition, an der die als nächstes auszulagernde Kassette bereitsteht, getroffen ist.

Weiterhin hat es sich als zweckmäßig erwiesen, daß die Kassetten bei der der Einlagerung dienenden Fahrt des Transportwagens auf den Kassettenplatz umgesetzt werden, der bei der an die Aufnahme der nächstfolgend auszulagernden Kassette anschließenden Fahrt des Transportwagens zur Auslagerstation in Fahrtrichtung hinten liegt.

Damit berücksichtigt die erfindungsgemäße Verfahrensweise gleichermaßen eine beliebige Anordnung von Auslagerstationen, von denen aus der Transportwagen zur Einlagerung von bezüglich ihres Inhaltes verbrauchten Kassetten sowohl in die eine als auch in die andere Richtung quer zur Längserstreckung des stangen- bzw. plattenförmigen Materials fahren kann, denn immer ist dafür gesorgt, daß die einzulagernde Kassette auf den Kassettenplatz des Transportwagens umgesetzt worden ist, der in anschließender Fahrtrichtung des Transportwagens mit der vollen Kassette zum Auslagerplatz hinten liegt.

Dabei hat diese Verfahrensweise auch den Vorteil, daß gleichermaßen mit an den jeweiligen Enden des Regallagers angeordneten Arbeitsplätze zum Auslagern und Wiederauffüllen von Kassetten umgegangen werden kann, da zum Anfahren dieser Füllplätze die jeweils leeren Kassetten auf die dem Füllplatz zugewandte Seite des Transportwagens während dessen Fahrt gesetzt werden können, um dann durch die noch zu beschreibende Umsetzvorrichtung vom Transportwagen auf den Füllplatz abgesetzt zu werden bzw. nach wiederauffüllen der Kassette von diesem heruntergenommen zu werden.

Innerhalb der erfindungsgemäßen Verfahrensweise kann weiterhin so vorgegangen werden, daß die Abnahme der einzulagernden Kassette vom Transportwagen zu Beginn oder während dessen Fahrt zur Auslagerstation erfolgt.

In diesem Rahmen besteht also zunächst grundsätzlich die Möglichkeit, daß das Regalbediengerät nach Absetzen der als nächstes auszulagernden Kassette auf dem Transportwagen zu der auf diesem noch stehenden, einzulagernden Kassette herüberfährt und diese abnimmt, woraufhin dann der Transportwagen mit der vollen Kassette zur Auslagerstation fahren kann. Hiermit verbindet sich jedoch, wenn auch im Rahmen der Erfindung, noch ein verhältnismäßig höherer Zeitaufwand.

Geschickter ist es daher, wenn das Regalbediengerät die als nächstes auszulagernde Kassette auf dem Transportwagen absetzt, dann der Transportwagen um eine Palettenposition in Richtung auf die Auslagerstation vorrückt, damit danach das Regalbediengerät die einzulagernde Kassette bei einem kurzen Stop oder Schleichgang des Transportwagens von diesem abnehmen kann.

Zur Durchführung der vorbeschriebenen, erfindungsgemäßen Verfahrensweise ist ein Regallager der eingangs genannten Art erfindungsgemäß dadurch gekennzeichnet, daß auf dem Transportwagen eine quer zur Materiallängsrichtung bewegbare Umsetzvorrichtung für die Anhebung und Überbringung einer auf einem Kassettenplatz des Transportwagens befindlichen Kassette auf einen anderen Kassettenplatz des Transportwagens angeordnet ist.

Durch diese grundsätzliche Ausstattung des Transportwagens mit einer Umsetzvorrichtung läßt sich also die jeweils einzulagernde Kassette in der bereits beschriebenen Weise während der der Einlagerung dienenden Rückfahrt des Transportwagens umsetzen, so daß sie bei dem dem Kassettenwechsel dienenden Treffen zwischen Transportwagen und Regalbediengerät bereits die Position hat, mit der der Transportwagen nach Aufnahme der als nächstes auszulagernden Kassette auf dem Weg in Richtung auf die Auslagerstation das Regalbediengerät noch einmal passiert, so daß dann in der vorstehend bevorzugt genannten Weise vom Regalbediengerät die einzulagernde Kassette vom Transportwagen gegebenenfalls verbunden mit dessen kurzem Anhalten abgenommen werden kann.

Wie bereits vorstehend angedeutet, ist es nach der Erfindung zweckmäßig, daß der Transportwagen beidseits des mit den Längsfördermitteln - normalerweise eine Rollenbahn - ausgestatteten Kassettenplatzes je einen weiteren Kassettenplatz aufweist. Damit ist es möglich, die einzulagernde Kassette je nach Fahrtrichtung des Transportwagens, die von der Position der als nächstes auszulagernden Kassette abhängt, auf dem Transportwagen in der erfindungsgemäßen Weise umzusetzen.

Außerdem hat es sich als besonders zweckmäßig erwiesen, daß der Transportwagen ein im wesentlichen C-förmiges oder doppel-T-förmiges Grundrißprofil aufweist, daß der Steg dieses Grundrißprofiles mit der Anordnung des Längsfördermittels übereinstimmt, daß die freien Schenkel dieses Grundrißprofiles horizontale Balken zur Bildung von Kassettenpositionen enthalten, und daß die Schlitten in miteinander synchronisierter Weise entlang der Schenkel neben diesen horizontal verfahrbar sind.

Damit hat der Transportwagen insbesondere eine Bauform für die Anpassung an Füllstationen, um einen dort vorhandenen Tisch zur Positionierung der zu füllenden Kassette zu umgreifen und dabei mit Hilfe der Umsetzvorrichtung die Kassette auf dem Tisch abzusetzen bzw. von diesem abzuheben.

Entsprechend dem für den Transportwagen angegebenen Erfindungsgedanken ist es gleichermaßen auch zweckmäßig, daß die Auslagerstation eine quer zur Materiallängsrichtung bewegbare Umsetzvorrichtung für die Anhebung und Überbringung einer auf einem Kassettenplatz der Auslagerstation befindlichen Kassette auf den anderen Kassettenplatz aufweist. Dadurch ist in noch später zu beschreibender Weise die Vorbereitung für einen zeitgleichen Kassettenwechsel zwischen Transportwagen und Auslagerstation sowohl für die auszulagernde als auch für die einzulagernde bzw. rückzulagernde Kassette gegeben.

Was die bereits erwähnte Umsetzvorrichtung des Transportwagens bzw. der Auslagerstation betrifft, so ist es vorteilhaft, daß diese beiden Längsenden der Kassetten zugeordnet je einen höhenverstellbaren und quer zur Materiallängsrichtung entlang äußerer Schienen des Transportwagens bzw. der Auslagerstation verfahrbaren Schlitten zur Aufnahme einer Kassette aufweist.

Diese Schlitten können über vertikale, längenveränderbare Ständer mit auf den äußeren Schienen bewegbaren Fahrwerken in Verbindung stehen und über Zylinder-Kolben-Aggregate höhenverstellbar bzw. höheneinstellbar sein, die einerseits an ihnen und andererseits im Bereich der Fahrwerke schwenkbar angelenkt sind.

Diese Ausbildung gibt die Möglichkeit, die Kassetten jeweils gegenüber ihrer Auflage auf dem Transportwagen bzw. der Auslagerstation durch Anheben freizumachen und sie dann in eine andere Position umzusetzen.

Dabei ist es zweckmäßig, daß jeder Schlitten den beiden Stirnseiten einer Kassette zugeordnete Stützwinkel zur Auflagerung und Längs- bzw. Querjustirung der Kassette aufweist, deren waagerechter Schenkel die Kassette unterfängt, während ihr vertikaler Schenkel eine Anlage gegen die Kassettenstirn- bzw. -seitenwand ist.

Dadurch werden die Kassetten sicher erfaßt, wobei sich gleichzeitig die Möglichkeit gibt, die Kassetten in Längsrichtung des Materials bzw. in Längsrichtung der Kassetten zu justieren bzw. neu auszurichten. Um hier Schwierigkeiten bzw. Kollisionen zu vermeiden, erscheint es vorteilhaft, daß der vertikale Schenkel der Stützwinkel im Bereich seines freien Endes von der Kassettenstirn- bzw. -seitenwand fort geneigt bzw. abgeschrägt ist.

Vorstehend wurde im Kassettenwechsel zwischen Transportwagen und Auslagerstation davon ausgegangen, daß der Transportwagen mit einer auszulagernden Kassette die Auslagerstation erreicht und diese Kassette auf die Auslagerstation übergibt, um dann anschließend mit seinen Längsfördermitteln, die üblicherweise durch eine Rollenbahn gebildet werden, auf eine mit der zweiten Kassettenposition der Auslagerstation fluchtenden Stellung gefahren zu werden, wo dann die Übergabe der wiedereinzulagernden Kassette von der Auslagerstation auf den Transportwagen erfolgen kann.

Um hier eine weitere Vereinfachung bzw. Beschleunigung vorzunehmen, wurde bereits vorstehend erwähnt, daß auch die Auslagerstation mit einer Umsetzvorrichtung zur Überführung einer ausgebrauchten Kassette von dem einen Kassettenplatz der Auslagerstation auf den anderen Kassettenplatz ausgerüstet sein kann. Damit ist der für die Aufnahme einer auszulagernden Kassette vorgesehene Platz der Auslagerstation durch die wiedereinzulagernde Kassette frei gemacht.

Um nun bei der Überführung der auszulagernden Kassette von dem Transportwagen auf die Auslagerstation gleichzeitig auch die einzulagernde bzw. rückzulagernde Kassette auf den Transportwagen abzugeben, hat es sich als vorteilhaft erwiesen, daß in Materiallängsrichtung fluchtend mit einer der Längsfördermittel der Auslagerstation ein unterstes Regalfach als höhenverstellbares, in Materiallängsrichtung wirksames Längsfördermittel ausgebildet ist. Auf dieses Längsfördermittel, das ebenfalls in der Regel eine Rollenbahn ist, kann nunmehr die einzulagernde Kassette überbracht werden. Anschließend kann durch Absenken des Längsfördermittels oder Anhebung der Umsetzvorrichtung des Transportwagens die einzulagernde Kassette auf dem Transportwagen abgesetzt werden. Bei dessen anschließender Fahrt zur Position der als nächstes aufzunehmenden, auszulagernden Kassette kann dann mit Hilfe der Umsetzvorrichtung die vorerwähnte Kassette in der weiter oben beschriebenen, erfindungsgemäßen Weise auf dem Transportwagen umgesetzt werden.

Wie bei Verfahren und Anlagen vorstehend beschriebenen Art inzwischen allgemein üblich, versteht es sich im Rahmen der Erfindung von selbst, daß sämtliche geschilderte Bewegungsabläufe selbstätig gesteuert mit Hilfe von Datenverarbeitungseinrichtungen erfolgen können. Diese Zusammenhänge und Einrichtungen sind, weil allgemein bekannt und üblich, nicht mehr im einzelnen beschrieben.

Weitere Merkmale und Einzelheiten der Erfindung ergeben sich aus der nachfolgenden Beschreibung von Ausführungsformen, die in der Zeichnung vereinfacht dargestellt sind. In der Zeichnung zeigen:
- Fig. 1: die Queransicht eines Regallagers entsprechend der Pfeilrichtung I in Fig. 2 bzw. Fig. 3;
- Fig. 2: die Oberansicht des Regallagers gemäß Fig. 1 aus der Ebene der Schnittlinie II-II in Fig. 1;
- Fig. 3: die Vorderansicht des Regallagers gemäß der Pfeilrichtung III in Fig. 1 bzw. Fig. 2;
- Fig. 4: die vergrößerte Darstellung des Ausschnittes IV in Fig. 1;
- Fig. 5: die vergrößerte Darstellung des Ausschnittes V in Fig. 3;
- Fig. 6: eine Füllstation Für das Regallager;
- Fig. 7: eine teilweise Seiten- und Oberansicht von Fig. 6;
- Fig. 8 bis 18: einen Kassettenwechsel mit einem Lastspiel nach der Erfindung und
- Fig. 19 bis 25: einen Kassettenwechsel mit einem anderen Lastspiel nach der Erfindung.

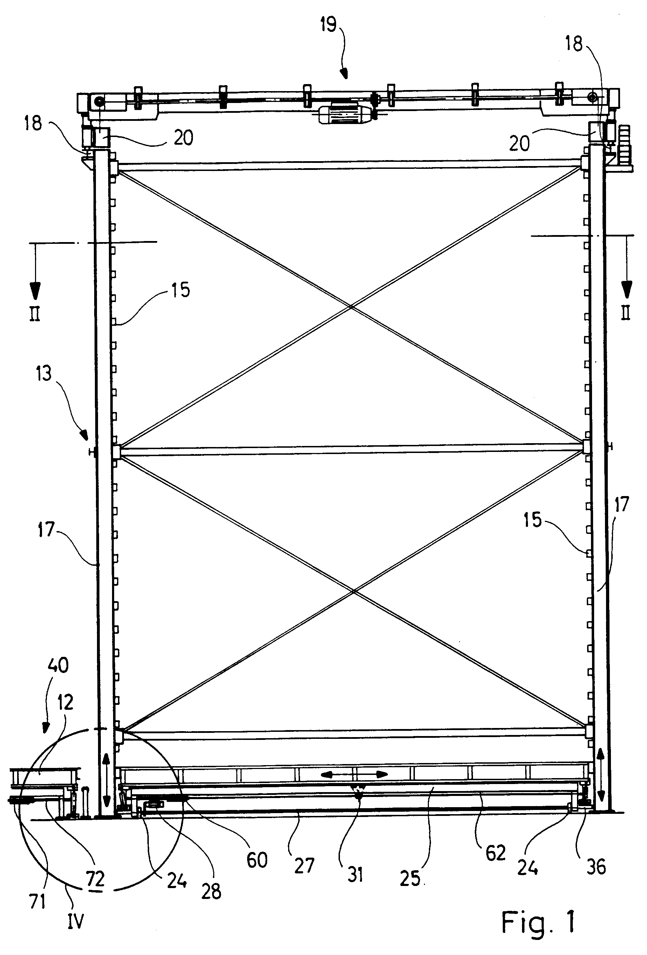

Gemäß den Fig. 1 bis 4 besteht ein Regallager 11 für stangenförmiges Material enthaltende Kassetten 12 im wesentlichen aus quer zur Längserstreckung der Kassetten 12 nebeneinander angeordneten Regalen 13, die über Regalgänge 14 voneinander getrennt sind.

Die Regale weisen sich horizontal und quer zur Materiallängsrichtung in den jeweils benachbarten Regalgang erstreckende Tragarme 15 zur Bildung von Regalfächern für die Kassetten 12 auf, wobei die Kassetten mit stirnseitigen Auflagen 16 in Form einer U-förmigen Profilierung in Eingriff mit den Tragarmen 15 bringbar sind.

Diese Art der Kassettenlagerung und -ausbildung ist bekannt und im einzelnen beispielsweise in der DE-OS 36 02 201 beschrieben, so daß darauf hier im einzelnen nicht mehr eingegangen zu werden braucht.

Die Tragarme 15 sind an endständigen Stützen 17 der Regale 13 befestigt, die an ihrem oberen Ende außen durch Laufschienen 18 für ein Regalbediengerät 19 miteinander verbunden sind. Dieses Regalbediengerät 19 ist im wesentlichen ein über Kopf laufender Kran mit an beiden Seiten der Regale je einem absenkbaren Lastbalken 20, wobei die Lastbalken 20 über Laufrollen 21 an den Regalstützen 17 geführt sind und in ebenfalls aus der DE-OS 36 02 201 bekannten Weise gabelförmige Lastaufnahmemittel 22 trägt, die mit den Auflagen 16 der Kassetten 12 in Eingriff bringbar sind. Es versteht sich von selbst, daß die beidseits der Regale 3 angeordneten Lastbalken 20, die ausgehend vom Kran 19 über Ketten 23 heb- und senkbar sind, bezüglich ihrer Bewegungen miteinander synchronisiert sind.

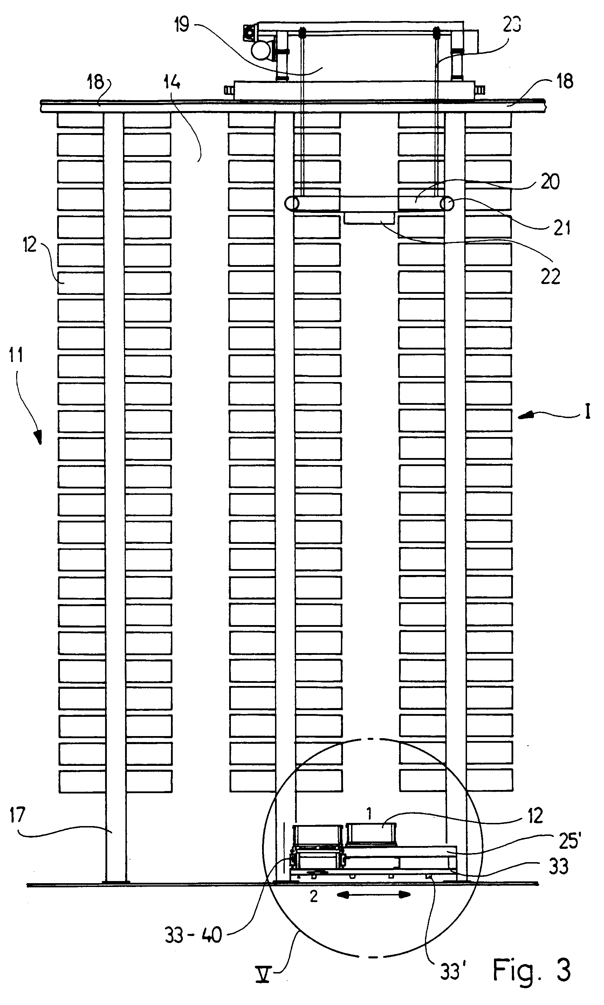

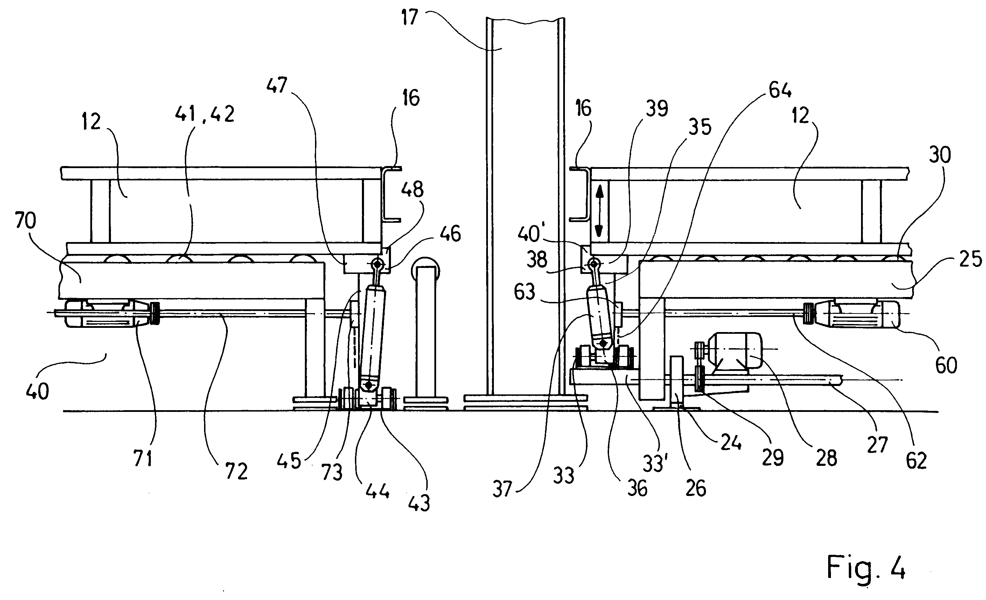

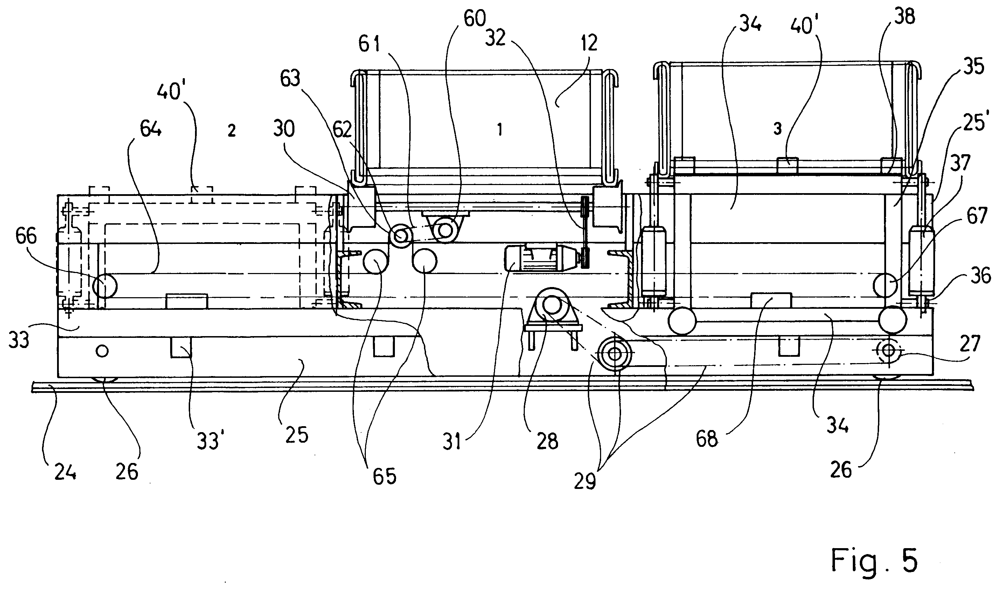

Die nebeneinander stehende Anordnung von Regalen 13 ist entlang zwischen den Regalstützen 17 angeordneter Fahrbahnen 24 quer zur Längserstreckung der Paletten 12 durch einen Transportwagen 25 unterfahrbar, der in den Fig. 1 und 3 insgesamt in Quer- bzw. Stirnansicht dargestellt ist, dessen Einzelheiten aber eher anhand der Fig. 4 und 5 erläutert werden können.

Wie aus den Fig. 4 und 5 ersichtlich, ist der Transporterwagen 25 auf den bereits erwähnten Schienen 24 verfahrbar mit Hilfe von Rädern 26, von denen wenigstens ein Paar durch eine Welle 27 miteinander synchronisiert ist, über die auch mit Hilfe eines Motors 28 der Fahrantrieb 29 erfolgt. Genauso gut könnte hier aber auch in bekannter Weise der Antrieb auf beiden Seiten des Transportwagens je durch einen eigenen Motor erfolgen, wobei die Motoren miteinander bzgl. der Fahrbewegungen synchronisiert sind.

Auf dem Transportwagen 25 sind, wie am besten aus Fig. 5 ersichtlich, quer zur Längsrichtung der Paletten 12 drei nebeneinander angeordnete Palettenpositionen 1, 2 und 3 gebildet, wobei die mittlere Palettenposition 1 aus einer Rollenbahn mit Rollen 30 besteht, die mit Hilfe eines Motors 31 über eine Antriebsverbindung 32 in beiden Richtungen drehantreibbar ist.

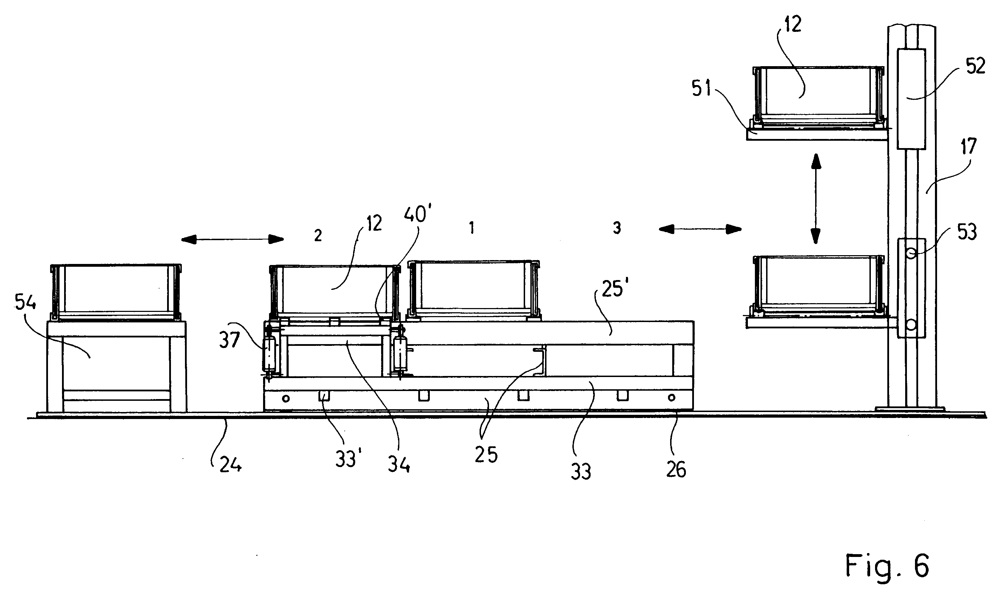

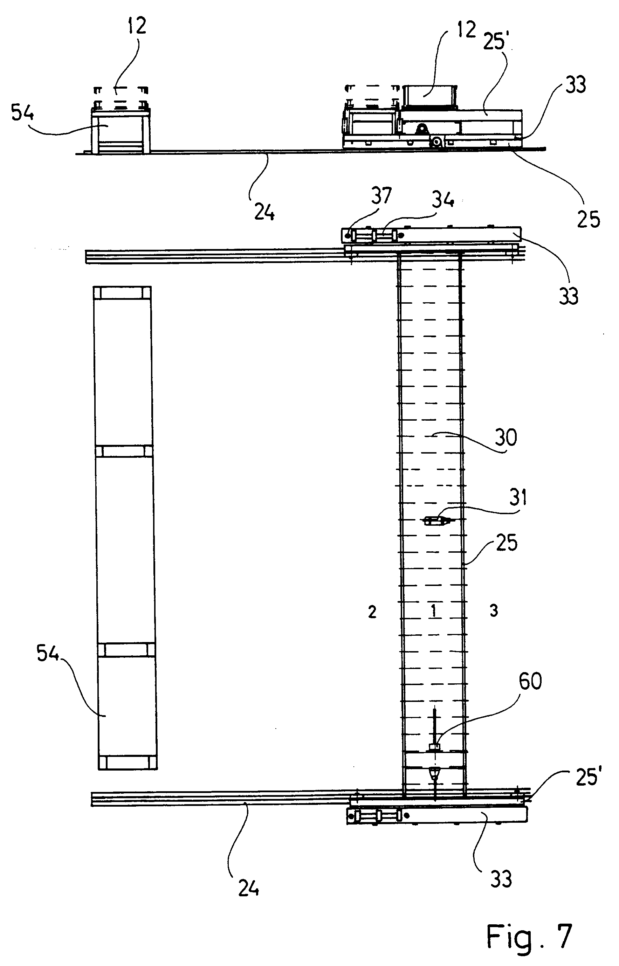

Die beiden anderen Palettenpositionen 2 und 3 sind grundsätzlich durch eine entsprechende Aufstandsfläche des Transportwagens 25 für die Paletten 12 gegeben, die wie aus Fig. 6 und 7 ersichtlich, durch Balken 25′ quer zur Längsrichtung des Transportwagens 25 gegeben sind.

Der Transportwagen 25 weist außerdem im Bereich beider Stirnseiten der Paletten 12 äußere Schienen 33 getragen von rahmenfesten Stegen 33′ auf, über die Schlitten 34 einer Umsetzvorrichtung für die Paletten quer zur Längserstreckung der Paletten 12 am Transportwagen 25 verfahrbar sind. Hierbei sind die Schlitten 34 der Umsetzvorrichtung über vertikale, längenveränderbare Ständer 35 mit auf den äußeren Schienen 33 bewegbaren Fahrwerken 36 in Verbindung und über jeweils ein Zylinder-Kolben-Aggregat 37 höheneinstellbar, welches einerseits an der Oberseite des Schlittens 34 und andererseits im Bereich des jeweiligen Fahrwerks 36 schwenkbar angelenkt ist.

Wie aus den Fig. 4 und 5 ersichtlich, weisen außerdem die Schlitten 34 auf beiden Seiten den beiden Stirnseiten einer jeweiligen Kassette 12 zugeordnete Stützwinkel 38 zur Auflagerung sowie Längs-und ggf. Querjustierung der jeweiligen Kassette auf, deren waagerechter Schenkel 39 die Kassette unterfängt, während ihr vertikaler Schenkel 40′ die Anlage gegen die Kassettenstirnwand ist. Dabei kann zur kollisionsfreien Handhabung zweckmäßigerweise der vertikale Schenkel 40′ der Stützwinkel 38 im Bereich seines oberen, freien Endes von der Kassettenstirnwand fort geneigt bzw. abgeschrägt sein.

Wie aus der in soweit erfolgten Beschreibung der Einzelheiten des Transportwagens 25 ersichtlich, kann auf ihm jeweils eine Palette 12 mit Hilfe der Umsetzvorrichtung (Schlitten 34) zwischen den Positionen 1, 2 und 3 hin- und hergesetzt werden, indem durch Wirkung der Zylinder-Kolben-Aggregate 37 die jeweilige Palette 12 angehoben und durch Antrieb der Fahrwerke 36 entlang der äußeren Schienen 33 verfahren wird.

Die Fig. 4 und 5 zeigen außerdem den synchronen, hin- und hergehenden Antrieb der Schlitten 34 über einen am Transportwagen 25 befestigten Motor 60, der über eine Kette 61 eine Welle 62 treibt über deren endständige Stirnzahnräder 63 an beiden Enden des Transportwagens eine endlose Kette 64 umläuft, die über Umlenkräder 65, 66, 67 geführt mit ihrem unteren, waagerecht durchgehenden Trum durch eine Kupplung 68 an den Schlitten 34 befestigt ist.

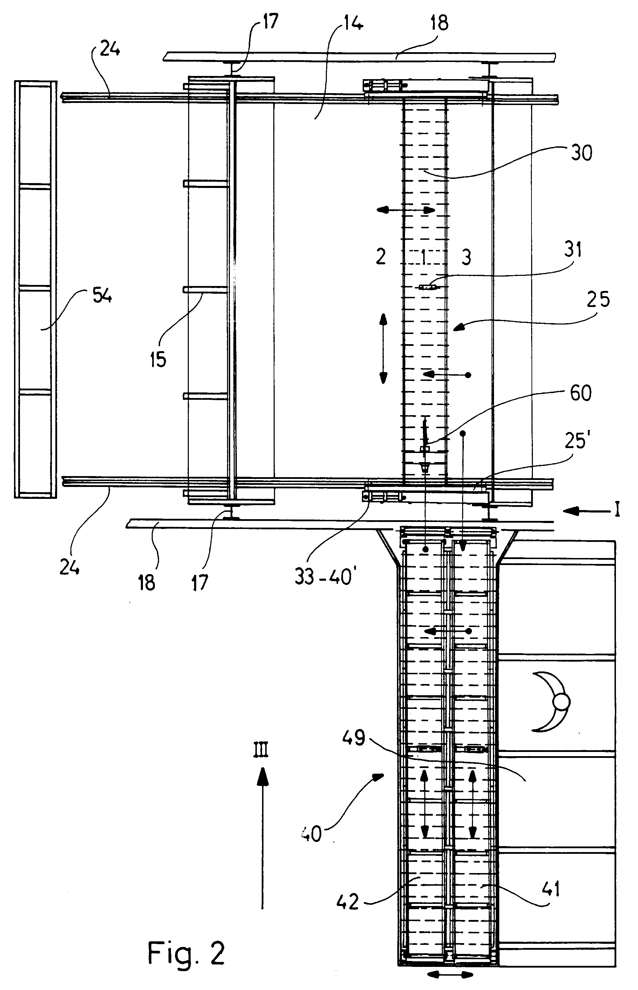

Wie aus Fig. 4 in Verbindung mit den Fig. 1 und 2 ersichtlich, ist dem Regallager auf einer Seite außerhalb eine Auslagerstation 40 zugeordnet, die nebeneinander zwei Plätze 4 und 5 für Kassetten 12 aufweist, die in der bereits im Zusammenhang mit dem Transportwagen beschriebenen Weise als Rollenbahnen 41 und 42 fluchten in Längsrichtung mit der Längsrichtung, die die Kassetten 12 innerhalb des Regallagers 11 einnehmen. Bezüglich der quer zur Längserstreckung der Paletten 12 gesehenen Richtung ist die Auslagerstation relativ zum Regallager 11 im Bereich zwischen zwei Stützen 17 nebeneinander angeordneter Regale positioniert.

Wie aus den Fig. 1, 2 und 4 ersichtlich, kann durch Antrieb der Rollenbahnen 30 bzw. 41 oder 42 eine Kassette 12 bei entsprechender Positionierung des Transportwagens 25 von der Rollenbahn 30 auf die Rollenbahn 41 ausgelagert und entweder von dieser nach Ausgebrauch wieder zurückgebracht werden oder aber innerhalb der Auslagerstation 40 auf die Rollenbahn 42 umgesetzt werden, um von da aus wieder auf die Rollenbahn 30 und damit die Position 1 des Transportwagens 25 zurückzugelangen. Für die zuletzt erwähnte Umsetzung von Kassetten innerhalb der Auslagerstation 40 dient eine Umsetzvorrichtung, die der bereits anhand des Transportwagens 25 beschriebenen Umsetzvorrichtung vergleichbar ist. Hierzu hat die Auslagerstation ebenfalls den beiden Stirnenden einer Kassette 12 zugeordnet äußere Schienen 43, entlang derer über Fahrwerke 44 und damit verbundene längenveränderbare Stützen 45 höheneinstellbare Schlitten verfahrbar sind, die wiederum Stützwinkel 46 aufweisen, die die Kassetten über ihre waagrechten Schenkel 47 und ihre vertikalen Schenkel 48 in längs- und ggf. querjustierter Weise aufnehmen können.

Der Fahrantrieb für die Schlitten der Umsetzvorrichtung der Auslagerstation 40 entspricht dem bereits anhand des Transportwagens beschriebenen und ist hier nicht mehr in allen Einzelheiten dargestellt und erläutert. Fig. 4 zeigt in vergleichbarer Weise lediglich einen am Gestell 70 der Auslagerstation befestigten Motor 71, der über eine Synchronwelle 72 und deren Stirnräder 73 beidseits auf die Schlitten der Umsetzvorrichtung innerhalb der Auslagerstation einwirkt.

Wie aus Fig. 2 in verallgemeinerter Darstellung ersichtlich, befindet sich neben der Auslagerstation 40 ein Arbeitsplatz 49, auf den das in der Kassette, die sich in der Position 4 befindet, enthaltene Material von Hand oder durch eine geeignete Vorrichtung ausgelagert werden kann.

In Entsprechung zum Auslagerplatz 40 zeigt Fig. 6 eine allgemein mit 54 bezeichnete Füll- und Entnahmestation, die man sich bezogen auf Fig. 3 beispielsweise links außen neben dem Regallager vorstellen kann so, daß auf der rechten Seite der Darstellung gemäß Fig. 6 gerade das letzte Lagerregal ersichtlich ist. Dieses ist jedoch anstelle der unteren Fächer mit wenigstens einem höhenverfahrbaren Aufstellplatz 51 für die Paletten 12 ausgerüstet, wozu dieser Aufstellplatz über Führungen 52 und in diesen enthaltene Laufrollen 53 an den zugeordneten Regalstützen 17 vertikal verfahrbar ist, damit der Transportwagen 25 unterhalb des Aufstellplatzes 51 hindurchfahren kann.

Auf der anderen Seite befindet sich ein Abstellplatz 54 für eine Kassette 12, wo diese von außen her mit neuem stangenförmigen Material beschickt werden kann.

Fig. 7 zeigt noch einmal besonders aus der Darstellung gem. Fig. 2 herausgenommen den Transportwagen 25, um zu verdeutlichen, daß dieser einen doppel-T-förmigen Aufbau aufweist. Sein Mittelsteg wird praktisch durch die Rollenbahn 30 gebildet, und an dessen Enden befinden sich quer dazu die Balken 25′ sowie die Schienen 33 für die Schlitten 34 derart, daß im dargestellten Beispiel der Abstellplatz durch den Transportwagen 25 umfahren oder umgriffen werden kann, um eine Kassette auf der Kassettenposition 2 des Transportwagens 25 abzugeben oder aufzunehmen. Gleichermaßen ergibt sich auf der anderen Seite des Transportwagens eine entsprechende Nutzungsmöglichkeit.

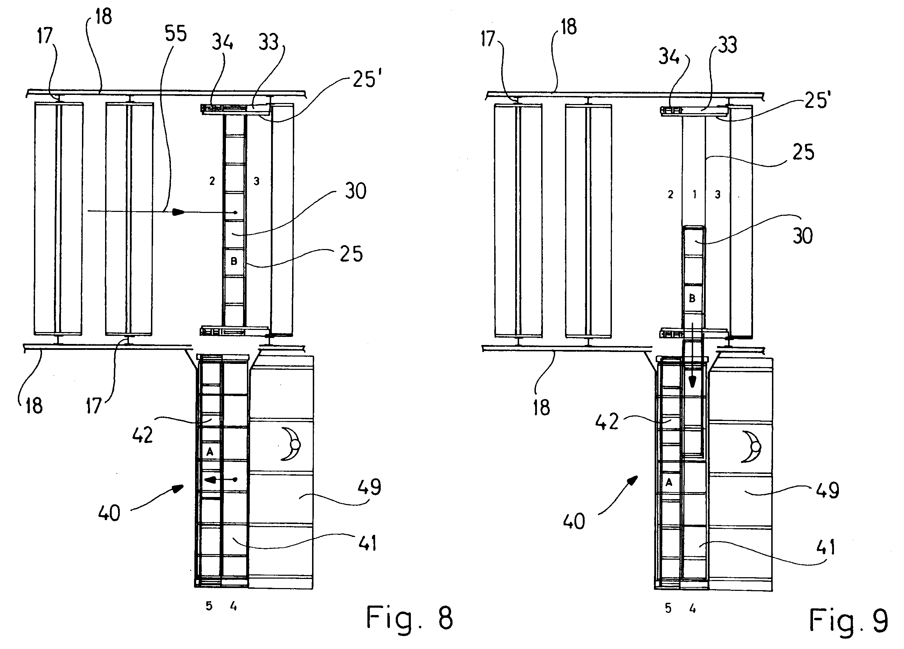

Die Arbeitsweise der so anhand der Fig. 1 bis 7 beschriebenen Einrichtung gestaltet sich nacheinander in der Reihenfolge der Fig. 8 bis 18 folgendermaßen:

Gemäß Fig. 8 befindet sich der Transportwagen 25 in Höhe des Auslagerplatzes 40 derart, daß eine entsprechend dem Pfeil 55 herbeigebrachte volle Kassette B auf den Kassettenplatz 4 der Auslagerstation 40 durch Betätigung der Rollenbahnen 30, 41 gebracht werden kann. Um den Platz 4 der Auslagerstation 40 freizumachen, ist die vorher bearbeitete und nunmehr leere Kassette A mit Hilfe der der Auslagerstation 40 eigenen Umsetzvorrichtung auf den Platz 5 und damit auf die Rollenbahn 42 umgesetzt worden.

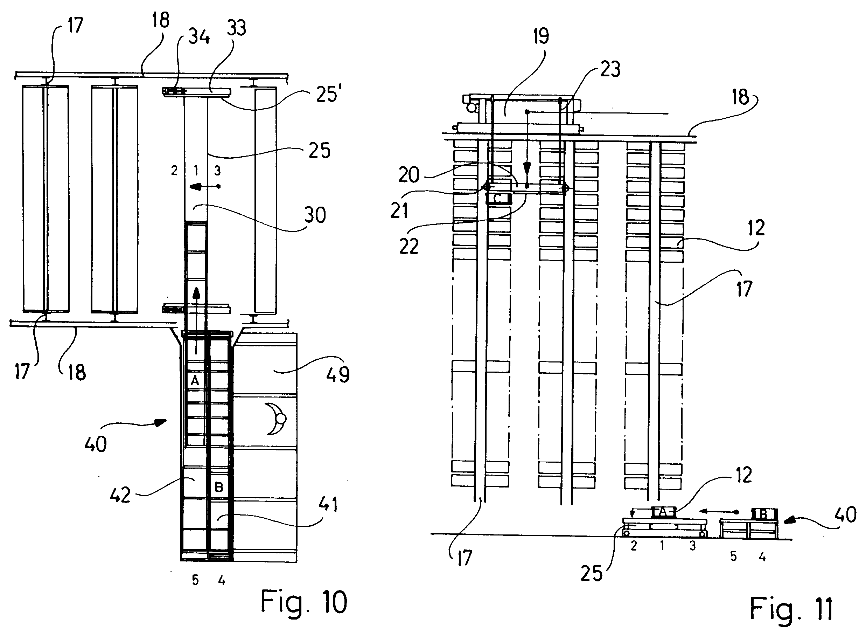

Fig. 9 zeigt nun, wie die volle Kassette B von der Position 1 des Transportwagens 25 auf die Position 4 der Auslagerstation 40 verfahren wird. Nachdem dies geschehen ist, wird der Transportwagen 25 um die Breite einer Kassette nach links verfahren so, daß die mit dem Kassettenplatz 1 verbundene Rollenbahn 30 des Transportwagens 25 mit der Rollenbahn 42 der Auslagerstation 40 fluchtet. Nunmehr kann, wie aus Fig. 10 ersichtlich, die leere Kassette A auf die mittlere Kassettenposition 1 des Transportwagens 25 gefahren werden.

Ist dies geschehen, wird die Kassette B in Arbeit genommen, während sich, wie aus Fig. 11 ersichtlich, der Transportwagen 25 mit der leeren Kassette A in Fahrt begibt in Richtung auf die Position der Kassette C, die nach der Kassette B als nächstes in Arbeit genommen werden soll.

Während dieser Rückfahrt wird die leere Kassette A von dem Kassettenplatz 1 des Transportwagens 25 auf den Kassettenplatz 2 mit Hilfe der dem Transportwagen eigenen Umsetzvorrichtung (Schlitten 34 etc.) umgesetzt, um die mittlere Position 1, also die mit der Rollenbahn ausgestattete Position freizumachen und um folgenden möglichst schnellen Kassettenwechsel zu ermöglichen:

Die Umsetzung der Kassette A von dem Kassettenplatz 1 auf den Kassettenplatz 2 des Transportwagens 25 erfolgt in Fahrtrichtung des Transportwagens, also so, daß die leere Kassette dem Transportwagen auf den Platz gebracht wird, der bei der an die Aufnahme der nächstfolgend auszulagernden Kassette anschließenden Fahrt des Transportwagens 25 zur Auslagerstation 40 in Fahrtrichtung hinten liegt. Diese Regel gilt in allgemeiner Form im Hinblick darauf, daß normalerweise beidseits der Auslagerstation Lagerregale angeordnet sein werden und daß durchaus auch mehrere Auslagerstationen bei einer Regalanlage denkbar sind. Würde also der Transportwagen von der in Fig. 10 bzw. 11 dargestellten Position ausgehend nach rechts zu irgendeinem benachbarten Lagerregal fahren, würde entsprechend dem Vorstehenden eine Leerkassette A von dem Platz 1 auf den Platz 3 des Transportwagens 25 umgesetzt werden.

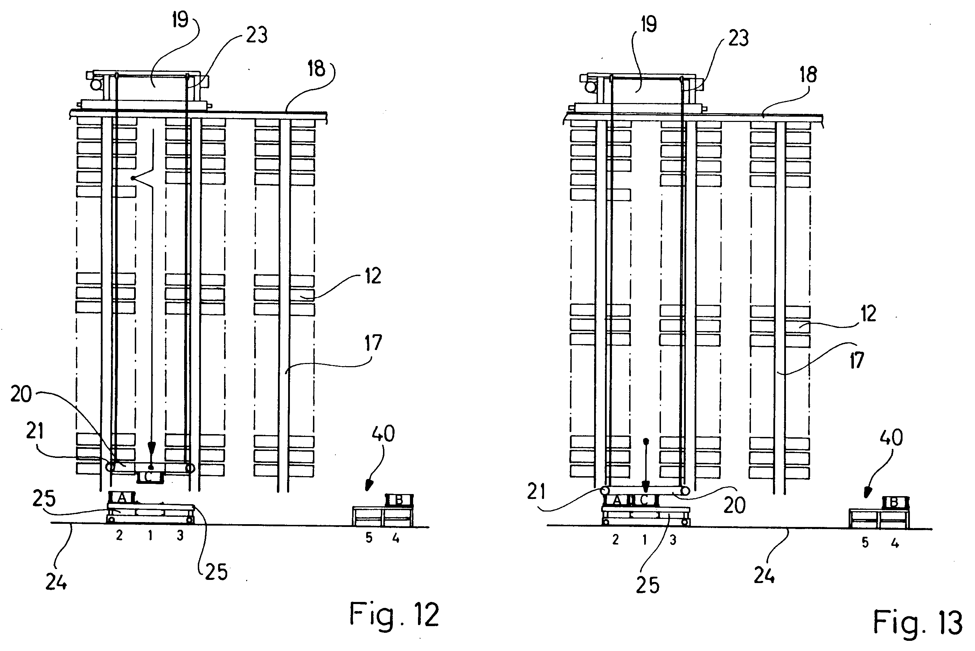

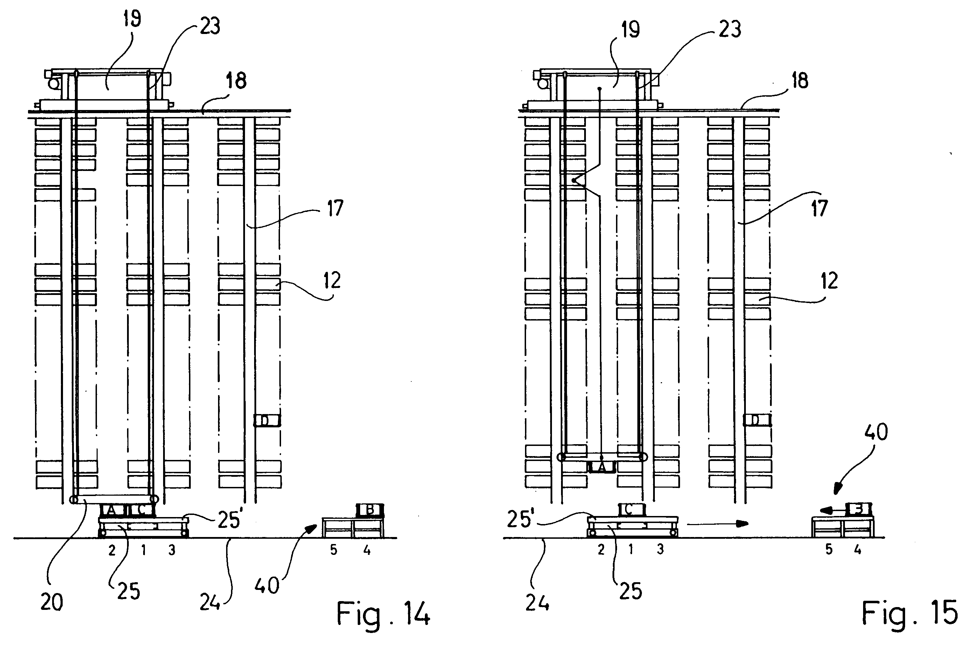

Kommt nun entsprechend Fig. 12 und 13 der Transportwagen mit der in der beschriebenen Weise umgesetzten Leerkassette A dort an, wo bereits die als nächstes in Arbeit zu nehmende Kassette C vom Regalbediengerät 19 bereitgehalten wird, so kann die Kassette C unmittelbar auf den Platz 1 und damit auf die Rollenbahn des Transportwagens 25 abgesetzt werden. Nunmehr wird das Regalbediengerät 19 etwas weiter nach unten gefahren, um von der Kassette C freizukommen. Dann kann aber, wie aus Fig. 14 ersichtlich, durch einen kurzen Vorschub des Transportwagens 25 die Leerkassette A an das Regalbediengerät gefahren werden, so daß das Regalbediengerät sofort die Leerkassette aufnehmen und - sobald die Kassette von den Stützwinkeln 38 freigekommen ist - den Transportwagen in die bereits eingeschlagene Richtung weiterfahren lassen kann, die außerdem auch noch bereits der Richtung entspricht, die zur Auslagerstation 40 führt, wo ja die nunmehr als nächstes vorgesehene Kassette C in Arbeit genommen werden soll.

Ebenso denkbar, aber vom Fahraufwand weniger günstig wäre es, das Regalbediengerät nach dem Absetzen der Kassette C etwas abzusenken und bei stillstehendem Transportwagen 25 die Lastgabeln zur Position der Leerkassette A zu fahren, die dann vor der Abfahrt des Transportwagens von diesem abgenommen wurde.

Das Regalbediengerät hat nun in der beschriebenen Weise die Leerkassette A aufgenommen und bringt diese, wie aus Fig. 15 ersichtlich, an den Regalplatz als Einlagerplatz, von dem vorher die Kassette C entnomen wurde. Hiermit ergibt sich für die einzulagernden Kassetten eine besonders kurze Rücklagerungszeit, weil für die Einlagerung bzw. Rücklagerung ausgehend von der in den Fig. 12 bis 14 gezeigten Position kein näheres, leeres Regalfach zur Verfügung stehen kann als das, aus dem die nächst zu bearbeitende Kassette entnommen wurde.

Diese unregelmäßige Aus- und Einlagerung von Kassetten führt zwar dazu, daß die Kassetten keinen festen Lagerplatz mehr haben. Darin besteht jedoch grundsätzlich keine Schwierigkeit, da es mit Hilfe moderner Datentechnik ohne weiteres möglich ist, solche Platzänderungen einzelner Kassetten zu erfassen und präsent zu haben.

Andererseits ist aber, wie geschildert, am jeweiligen Regalgang ein außerordentlich schneller und reibungsloser Kassettenwechsel möglich, bei dem weder das Regalbediengerät noch der Transportwagen eine Bewegung oder ein Stück einer Bewegung ausführen, das nicht unbedingt zu dem mit einem Kassettenwechsel verbundenen Hin- und Herfahren erforderlich wäre. So fährt das Regalbediengerät einmal innerhalb des Regalganges von oben nach unten und anschließend mit der Leerkassette wieder nach oben, während der Transportwagen einmal von der Auslagerstation zu dem Gang des Kassettenwechsels fährt und nach Richtungsumkehr sofort wieder ohne weiteren Halt zur Auslagerstation zu dem Gang des Kassettenwechsels fährt und nach Richtungsumkehr sofort wieder ohne weiteren Halt zur Auslagerstation zurückkehrt. Dies ist vor allem dadurch möglich, daß die jeweiligen Leerkassetten während der Fahrt des Transportwagens an den Platz umgesetzt werden können, der bezüglich der Fahrtrichtung nach Bewegungsumkehr des Transportwagens, also nach Aufnahme der nächst zu bearbeitenden Kassette (C) hinten liegt, so daß die vorhergehende Leerkassette (A) ohnehin zum Schluß am Regalbediengerät vorbeikommt.

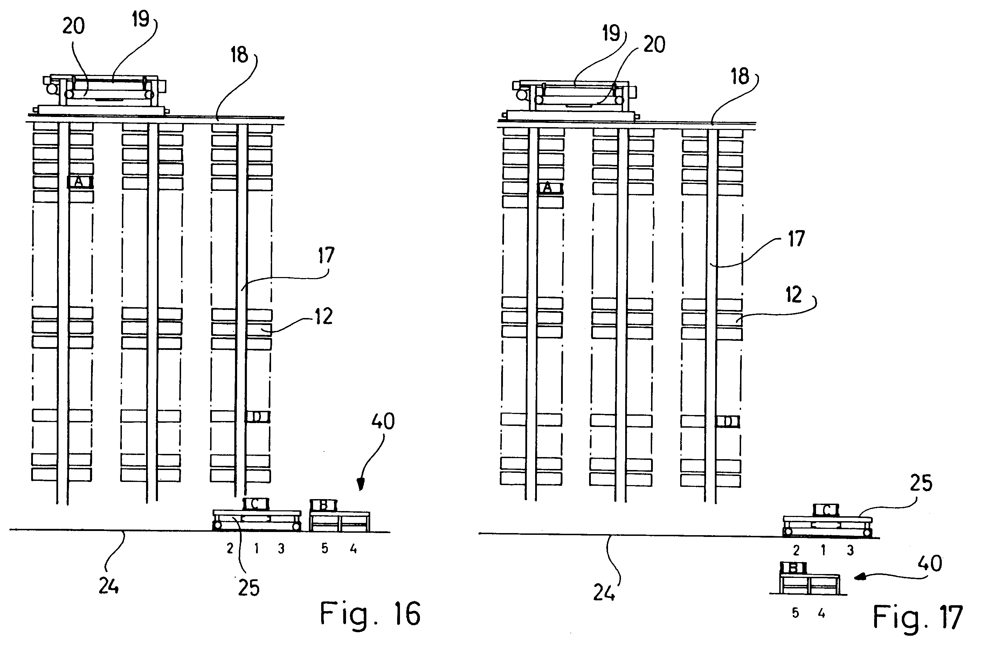

Wie nunmehr aus Fig. 16 und 17 ersichtlich, gelangt anschließend der Transportwagen mit der nächst zu bearbeitenden Kassette C wieder an die Auslagerstation 40, wo sich das bereits anhand der Fig. 8 bis 10 geschilderte Wechselspiel wiederholt. Wie aus Fig. 17 ersichtlich, ist bereits die vorher bearbeitete Kassette B von der Rollenbahn 41 des Kassettenplatzes 4 der Auslagerstation auf die Rollenbahn 42 des Kassettenplatzes 5 umgesetzt.

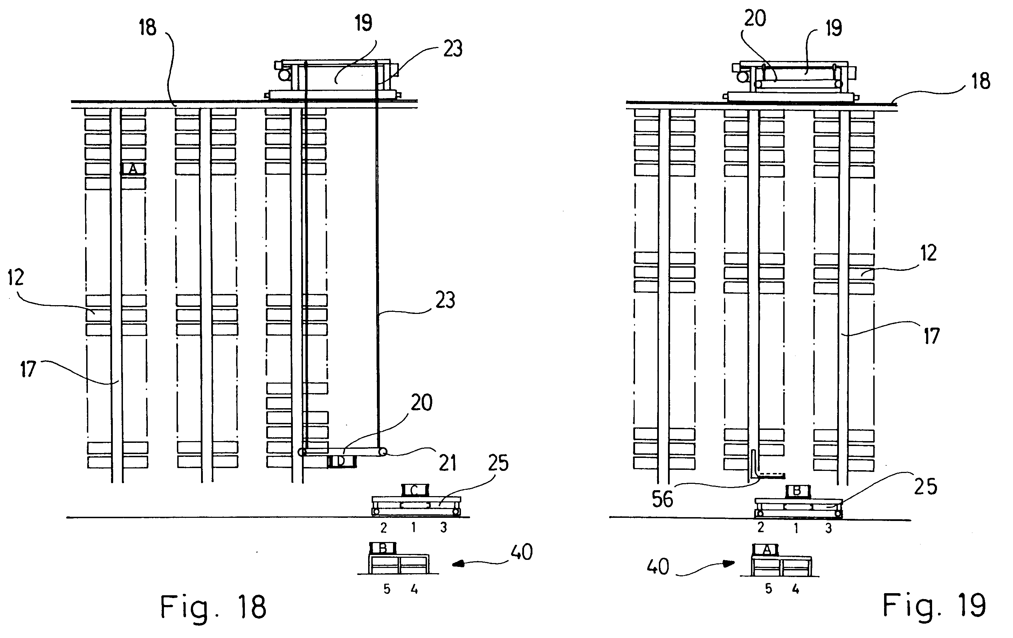

Außerdem ist aus den Fig. 14 bis 17 bereits eine Kassette D ersichtlich, die nunmehr nach der Kassette C als nächstes in Arbeit zu nehmen ist. Gemäß Fig. 18 steht diese Kassette D am Fuße eines Regalganges bereit, um in der beschriebenen Weise gegen die Kassette C ausgetauscht zu werden.

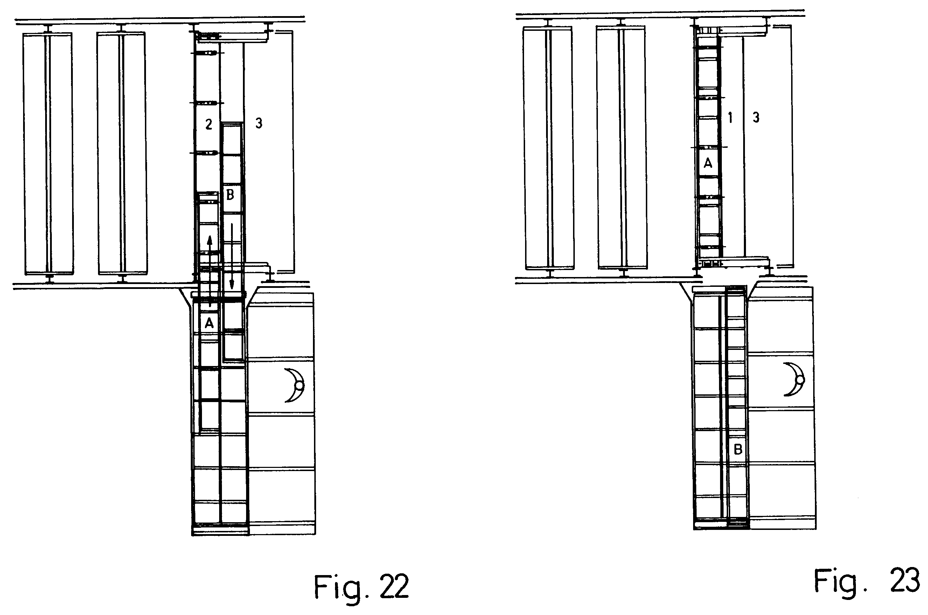

Um den Kassettenwechsel zwischen Transportwagen und Auslagerstation noch zu erleichtern und zu beschleunigen, sei auf die Variante gemäß Fig. 19 bis 25 hingewiesen.

Hierzu ist mit dem Kassettenplatz 5 der Auslagerstation 40 bzw. mit der dortigen Rollenbahn 42 fluchtend eine schematisch angedeutete Rollenbahn 56 vorgesehen, die an den benachbarten Regalstützen 17 höhenverfahrbar ist, so daß sie normalerweise von dem Transportwagen unterfahren werden kann.

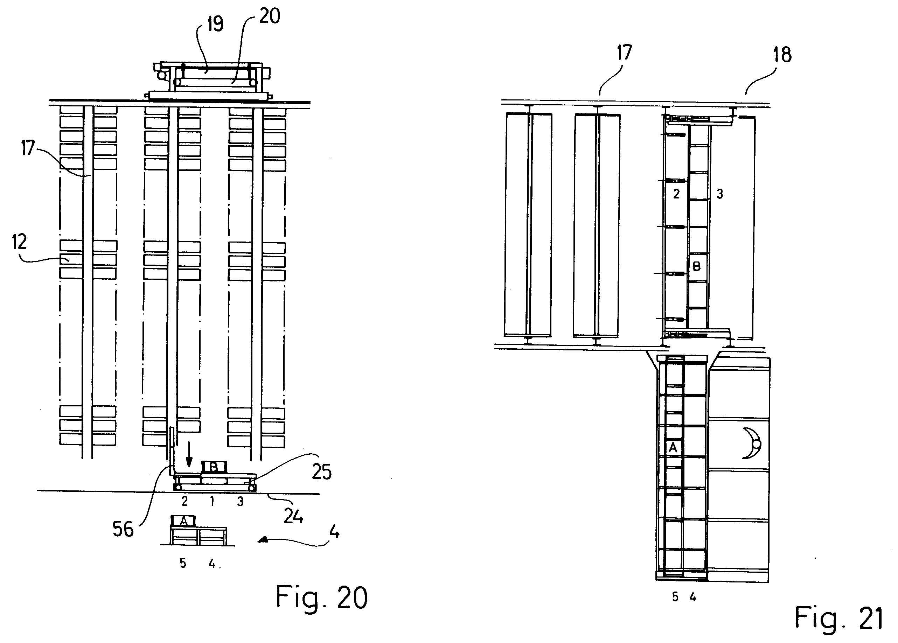

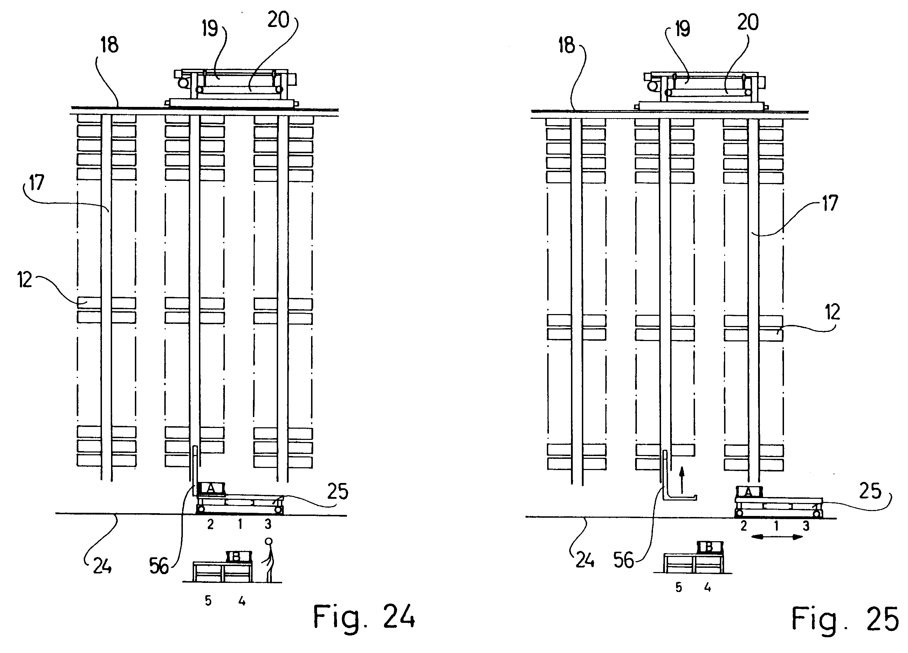

Wird sie, wie aus Fig. 20 ersichtlich, auf die Ebene des Transportwagens abgesenkt, so kann, wie aus den Fig. 21 bis 23 ersichtlich, ein gleichzeitiger Kassettenwechsel zwischen Leerkassette A und voller Kassette B stattfinden, wobei dann schließlich, wie aus Fig. 24 ersichtlich, die Leerkassette A vom Rollengang 55 mit Hilfe der Umsetzvorrichtung (Schlitten 34) des Transportwagens 25 abgenommen werden kann. Je nach anschließender Fahrtrichtung des Transportwagens kann dann die Umsetzvorrichtung die Leerkassette A entweder, wie aus Fig. 25 ersichtlich, auf dem ursprünglichen Platz 2 des Transportwagens lassen oder aber während der Weiterfahrt, wenn diese bezogen auf Fig. 25 nach rechts gehen sollte, auf den Platz 3 umsetzen.

Aufgrund der vorstehenden Erläuterung sei noch einmal auf Fig. 6 hingewiesen. Auch für den Fall, daß der Transportwagen eine Leerkassette zu dem Abstellplatz 54 bringen soll, findet während der Fahrt des Transportwagens ein Umsetzen der zu füllenden Kassette auf dem Transportwagen, im vorliegenden Falle auf dem Platz 2 statt, damit die Übergabe an den Abstellplatz so schnell wie möglich erfolgen kann. Auf der Rückfahrt der Kassette ins Regallager kann dann eine vorher gefüllte und auf dem Aufstellplatz 51 befindliche Kassette unmittelbar vom Transportwagen 25 aufgenommen und während der weiteren Rückfahrt im Regallager gegebenenfalls auf den geeigneten Platz des Transportwagens umgesetzt werden.

## Patentansprüche

1. Verfahren zur Aus- und Ein- bzw. Rücklagerung von Stangen- oder plattenförmiges Material enthaltenden Kassetten (12) bei einem Regallager (11) mit quer zur Materiallängsrichtung fluchtend nebeneinander angeordneten, durch Regalgänge (14) getrennten Regalen (13), die übereinander Regalfächer für die Kassetten (12) aufweisen, wobei die Kassetten (12) durch ein Regalbediengerät (19) zwischen den Regalfächern und einem die untersten Regalfächer quer zur Materiallängsrichtung unterfahrenden Transportwagen (25, 25') mit wenigstens zwei nebeneinander angeordneten Kassettenplätzen (1, 2, 3) gefördert werden, der sie einer Auslager- (40) oder Füllstation (54) zuführt und von dort wieder zur Einlagerung in ein Regal (13) zurückbringt, wobei einer der Kassettenplätze (1) des Transportwagens (25, 25') Längsfördermittel (30) zum Kassettenwechsel zwischen Auslager- oder Füllstation (54) und Transportwagen (25, 25') aufweist sowie die auszulagernde Kassette (12) nach ihrer Entnahme aus dem zugeordneten Regalfach auf einen freien Platz (1, 2, 3) des Transportwagens (25, 25') abgesetzt wird,
dadurch gekennzeichnet,
daß das Regalbediengerät (19) anschließend nach entsprechender horizontaler Relativbewegung zwischen Regalbediengerät (19) und Transportwagen (25, 25') die rückzulagernde Kassette (12) von deren Platz (1, 2, 3) auf den Transportwagen (25, 25') aufnimmt, und daß die rückzulagernde Kassette (12) anschließend durch das Regalbediengerät (19) an den Platz der vorher ausgelagerten Kassette (12) gebracht wird.

2. Verfahren nach Anspruch 1,
dadurch gekennzeichnet,
daß die Kassetten (12) bei der der Einlagerung dienenden Fahrt des Transportwagens (25, 25') auf einen neben dem Platz (1) mit den Längsfördermitteln (30) gelegenen Kassettenplatz (2, 3) umgesetzt werden, daß an dem durch die Gangposition der nächstfolgend auszulagernden Kassette (12) bestimmten Ende dieser Fahrt die nächstfolgend auszulagernde Kassette (12) auf dem die Längsfördermittel (30) aufweisenden Kassettenplatz (1) des Transportwagens (25, 25') abgesetzt wird, und daß dann die einzulagernde Kassette (12) vom Transportwagen (25, 25') abgenommen und in das durch die nächstfolgend auszulagernde Kassette (12) frei gewordene Regalfach gebracht wird.

3. Verfahren nach Anspruch 1 und 2,
dadurch gekennzeichnet,
daß die Kassetten (12) bei der der Einlagerung dienenden Fahrt des Transportwagens (25, 25') auf den Kassettenplatz (2 oder 3) umgesetzt werden, der bei der an die Aufnahme der nächstfolgend auszulagernden Kassette (12) anschließenden Fahrt des Transportwagens (25, 25') zur Auslagerstation (40) in Fahrtrichtung hinten liegt.

4. Verfahren nach einem der vorhergehenden Ansprüche,
dadurch gekennzeichnet,
daß die Abnahme der einzulagernden Kassette (12) vom Transportwagen (25, 25') zu Beginn oder während dessen Fahrt zur Auslagerstation (40) erfolgt.

5. Regallager (11) für in selbsttragenden Kassetten aufgenommenes, stangen- oder plattenförmiges Material
a) mit mehreren quer zur Materiallängsrichtung fluchtend nebeneinander angeordneten und durch Regalgänge (14) voneinander getrennten Regalen (13), die übereinander an vertikalen Regalstützen (17) befestigte, sich horizontal quer zur Materiallängsrichtung in den benachbarten Regalgang (14) erstreckende Tragarme (15) zur Bildung von Regalfächern für die Kassetten (12) und dabei für den Eingriff in die stirnseits vorstehenden Auflagen (16) der Kassetten (12) aufeisen,
b) ferner mit einem oberhalb bzw. seitlich der Regale (13) quer zur Materiallängsrichtung verfahrbaren Regalbediengerät (19), durch das die Auflagen (16) der Kassetten (12) stirnseitig untergreifbar sowie die Kassetten (12) quer zu den Regalgängen (14) und in diesen auf- und abbewegbar sind,
c) weiterhin mit einem unterhalb der untersten Regalfächer quer zur Materiallängsrichtung verfahrbaren Transportwagen (25, 25') zur Aufnahme wenigstens zweier nebeneinander angeordneter Kassetten (12),
d) sowie schließlich mit mindestens einer in Materiallängsrichtung neben den Regalen (13) auf der Höhe des Transportwagens (25, 25') angeordneten Auslagerstation (40) zur gleichzeitigen Aufnahme zweier nebeneinander angeordneter Kassetten (12),
wobei ein Kassetttenplatz (1) des Transportwagens (25, 25') sowie beide Kassettenplätze (4, 5) der Auslagerstation als in Materiallängsrichtung betätigbare, horizontale Längsfördermittel (30, 41, 42) für die Kassetten (12) ausgebildet sind zur Durchführung des Verfahrens nach den Ansprüchen 1 bis 4,
dadurch gekennzeichnet,
daß auf dem Transportwagen (25, 25') eine quer zur Materiallängsrichtung bewegbare Umsetzvorrichtung (33 bis 40') für die Anhebung und Überbringung einer auf einem Kassettenplatz (1) des Transportwagens (25, 25') befindlichen Kassette (12) auf einen anderen Kassettenplatz (2 oder 3) des Transportwagens (25, 25') angeordnet ist.

6. Regallager nach Anspruch 5,
dadurch gekennzeichnet,
daß der Transportwagen (25, 25') beidseits des mit den Längsfördermitteln (30) ausgestatteten Kassettenplatzes (1) je einen weiteren Kassettenplatz (2, 3) aufweist.

7. Regallager nach Anspruch 5 oder 6,
dadurch gekennzeichnet,
daß der Transportwagen (25, 25') ein im wesentlichen C-förmiges oder doppel-T-förmiges Grundrißprofil aufweist, daß der Steg dieses Grundrißprofils mit der Anordnung des Längsfördermittels (30) übereinstimmt, daß die freien Schenkel dieses Grundrißprofils horizontale Balken (25') zur Bildung von Kassettenpositionen (2, 3) enthalten, und daß die Schlitten (34) in miteinander synchronisierter Weise (Antriebsmittel 60 bis 65) entlang der Schenkel neben diesen horizontal verfahrbar sind.

8. Regallager nach Anspruch 5,
dadurch gekennzeichnet,
daß die Auslagerstation (40) eine quer zur Materiallängsrichtung bewegbare Umsetzvorrichtung 43 bis 48) für die Anhebung und Überbringung einer auf einem Kassettenplatz (4, 5) der Auslagerstation befindlichen Kassette (12) auf den anderen Kassettenplatz aufweist.

9. Regallager nach Anspruch 5 oder 8,
dadurch gekennzeichnet,
daß die Umsetzvorrichtung (33 bis 40'; 43 bis 48) beiden Längsenden der Kasssetten (12) zugeordnet je einen entlang äußerer Schienen (33, 43) des Transportwagens (25, 25') bzw. der Auslagerstation (40) verfahrbaren Schlitten (34) zur Aufnahme einer Kassette (12) aufweist.

10. Regallager nach Anspruch 9,
dadurch gekennzeichnet,
daß jeder Schlitten (34) über vertikale, längenveränderbare Ständer (35, 45) mit auf den äußeren Schienen (33, 43) bewegbaren Fahrwerken (36, 44) in Verbindung steht und über Zylinder-Kolben-Aggregate (37) höhenverstellbar ist, die einerseits an ihm und andererseits im Bereich der Fahrwerke (36, 44) schwenkbar angelenkt sind.

11. Regallager nach Anspruch 9 oder 10,
dadurch gekennzeichnet,
daß jeder Schlitten (34) den beiden Stirnseiten einer Kassette (12) zugeordnete Stützwinkel (38, 46) zur Auflagerung und Längs- bzw. Querjustierung der Kassette (12) aufweist, deren waagerechter Schenkel (39, 47) die Kassette unterfängt, während ihr vertikaler Schenkel (40', 48) in Anlage gegen die Kassettenstirn- bzw. seitenwand ist.

12. Regallager nach Anspruch 11,
dadurch gekennzeichnet,
daß der vertikale Schenkel (40', 48) der Stützwinkel (38, 46) im Bereich seines freien Endes von der Kassettenstirn- bzw. seitenwand fort geneigt bzw. abgeschrägt ist.

13. Regallager nach Anspruch 5,
dadurch gekennzeichnet,
daß in Materiallängsrichtung fluchtend mit einer der Längsfördermittel (42) der Auslagerstation (40) ein unterstes Regalfach als höhenverstellbares, in Materiallängsrichtung wirksames Längsfördermittel (56) ausgebildet ist.

## Claims

1. A method for the removal from and putting into and returning to storage of magazines (12) containing rod-like or plate-like material in a storage rack system (11) with storage racks (13) arranged next to and in alignment with each other transversely to the longitudinal direction of the material and separated from each other by gangways (14), the racks having superposed compartments for the magazines (12), the magazines (12) being conveyed by means of a rack service device (19) between the rack compartments and a transport carriage (25, 25') which travels below the lowermost rack compartments transversely to the longitudinal direction of the material and which has two juxtaposed magazine locations (1, 2, 3), the carriage moving the magazines to a removal station (40) or a filling station (54) and from there returning them again to a rack (13) for putting into storage, wherein one of the magazine locations (1) of the transport carriage (25, 25'), has longitudinal conveying means (30) for exchanging magazines between the removal station (40) or the filling station (54) and the transport carriage (25, 25') and the magazine (12) to be removed is set down after its removal from the associated rack compartment to a free place (1, 2, 3) of the transport carriage (25, 25'),
characterised in that,
after a corresponding relative movement between the rack service device (19) and the transport carriage (25, 25') the rack service device (19) picks up the magazine (12) to be returned to storage from its place (1, 2, 3) on the transport carriage (25, 25'); and in that thereafter the magazine (12) to be returned to storage is brought by the rack service device (19) to the location of the magazine (12) that was previously taken from storage.

2. A method according to claim 1,
characterised in that
during the travel of transport carriage (25, 25') serving to put the magazines (12) into storage the latter are shifted to a magazine location (2, 3) next to the location (1) equipped with the longitudinal conveyor means (30): in that at the end of this travel determined by the aisle position of the next successive magazine (12) to be removed from storage, the next successive magazine (12) is set down at the magazine location (1) of the transport carriage (25, 25') equipped with the longitudinal conveyor means (30); and in that then the magazine (12) to be placed into storage is taken off the transport carriage (25, 25') and brought into the rack compartment vacated by the magazine (12) next to be removed from storage.

3. A method according to claims 1 and 2,
characterised in that
during the travel of the transport carriage (25, 25') serving for putting magazines (12) into storage the latter are shifted to the magazine location (2 or 3) which lies at the trailing end of the carriage, taken in the direction of travel, during the travel of the transport carriage (25, 25') to the station (40) for removal from storage subsequent to the reception of the next magazine (12) to be removed from storage.

4. A method according to any preceding claim,
characterised in that
the removal of the magazine (12) to be put into storage from the transport carriage (25, 25') takes place at the beginning of or during its travel to the removal station (40).

5. Storage rack system (11) for rod-like or plate-like material accommodated in self-supporting magazines
(a) with a plurality of juxtaposed storage racks (13) mutually aligned transversely of the direction of the material and separated from each other by gangways (14), which racks have carrier arms (15) secured one above the other to vertical rack supports (17) and extending horizontally transversely to the longitudinal direction of the material into the adjacent rack gangway (14) to form rack compartments for the magazines (12) and also for engagement into frontally projecting holding structures (16) of the magazines (12),
(b) further, with a rack service device (19) mobile above or laterally of the rack (13) transversely to the longitudinal direction of the material by means of which device the holding structures (16) of the magazines (12) are frontally graspable from below and the magazines (12) may be moved upwardly and downwardly transversely to and in the rack gangways (14),
(c) further, with a transport carriage (25, 25') for accommodating at least two magazines (12) arranged next to each other, the carriage being mobile beneath the lowermost rack compartments transversely to the longitudinal direction of the material,
(d) as well as, finally, with at least one removal station (40) arranged along the longitudinal direction of the material next to the racks (13) at the height of the transport carriage (25, 25') for the simultaneous reception of two magazines (12) arranged next to each other,
wherein one magazine location (1) of the transport carriage (25, 25') as well both magazine locations (2, 3) of the removal station (40) are formed as horizontal longitudinal conveying means (30, 41, 42) for the magazines (12) actuatable in the longitudinal direction of the material, for the performance of the method according to claims 1 to 4,
characterised in that
on the transport carriage (25, 25') a shifting device (33 to 40') is arranged for displacement transversely to the longitudinal direction of the material for the lifting and bringing-over of a magazine (12) disposed at a magazine location (1) of the transport carriage (25, 25') to another magazine location (2 or 3) of the transport carriage (25, 25').

6. Storage rack system according to claim 5,
characterised in that
on both sides of the cassette location (1) equipped with the longitudinal conveyor means (30) the transport carriage (25, 25') has a respective further magazine location (2, 3).

7. Storage rack system according to claim 5 or 6,
characterised in that
the transport carriage (25, 25') has all essentially C-shaped or double-T-shaped profile in plan; in that the web of this profile in plan conforms with the arrangement of the longitudinal conveyor means (30); in that the free limbs of this profile in plan contain horizontal beams (25') for forming the magazine locations (2, 3); and in that the slides (34) are mobile horizontally along and next to the limbs in a mutually synchronised manner (drive means 60 to 65).

8. Storage rack system according to claim 5,
characterised in that
the removal station (40) has a shifting device (43 to 48) displaceable transversely of the longitudinal direction of the material for the lifting and bringing over of a magazine (12) disposed at a magazine location (4, 5) of the removal station to another magazine location.

9. Storage rack system according to claim 5 or 8,
characterised in that
the shifting device (33 to 40': 43 to 48) has a respective slide (34) for receiving a magazine (12) and associated with the two longitudinal ends of the magazines (12), each slide being mobile on respective outer rails (33, 43) of the transport carriage (25, 25') and of the removal station (40).

10. Storage rack system according to claim 9,
characterised in that
each slide (34) is connected via vertical, longitudinally adjustable frame mounts (35, 45) with dolleys (36, 44) displaceable on the outer rails (33, 43) and is adjustable in height by way of piston-and-cylinder units (37) pivotally linked, on the one hand, to the slide and, on the other hand, to the region of the dolleys (36, 44).

11. Storage rack system according to claim 9 or 10,
characterised in that
each slide (34) has angled support brackets (38, 46) associated with both ends faces of a magazine (12) for supporting and for longitudinally and transversely adjusting the magazine (12), the horizontal limbs (39, 47) of the brackets underpinning the magazine while their vertical limbs (40', 48) are in engagement with the front or side wall of the magazine.

12. Storage rack system according to claim 11,
characterised in that
the vertical limb (40', 48) of the angled supporting bracket (38, 46) is sharply bent or bevelled in the region of its free end away from the front or side wall of the magazine.

13. Storage rack system according to claim 5,
characterised in that
in the longitudinal direction of the material and in alignment with one of the conveyor means (42) of the removal station (40) one lowermost rack compartment is formed as a height-adjustable longitudinal conveyor means (48) operative in the longitudinal direction of the material.

## Revendications

1. Procédé pour stocker et déstocker ou restocker des cassettes (12) contenant un matériau en forme de barres ou de plaques, dans un magasin à rayonnages (11) comportant des rayonnages (13), qui sont disposés côte-à-côte en étant alignés transversalement par rapport à la direction longitudinale du matériau et séparés par des allées (14) et qui possèdent des casiers superposés pour les cassettes (12), et selon lequel les cassettes (12) sont entraînées par un appareil (19) de desserte des rayonnages, entre les casiers des rayonnages et un chariot de transport (25,25'), qui se déplace au-dessous des casiers les plus bas des rayonnages, transversalement dans la direction longitudinale du matériau et qui comporte au moins deux emplacements (1,2,3) pour cassettes, disposés côte-à-côte, et qui amène les cassettes à un poste de déstockage (40) ou de remplissage (54) et les ramène, à partir de là, à nouveau pour leur stockage sur un rayonnage (13), et selon lequel l'un (1) des emplacements pour cassettes du chariot de transport (25,25') comporte des moyens d'entraînement longitudinal (30) pour le changement des cassettes entre le poste de déstockage ou de remplissage (54) et le chariot de transport (25,25'), et selon lequel la cassette (12) à déstocker est déposée en un emplacement libre (1,2,3) du chariot de transport (25,25'), après son prélèvement du casier associé du rayonnage,
caractérisé en ce qu'après un déplacement horizontal relatif correspondant entre l'appareil (19) de desserte des rayonnages et le chariot de transport (25,25'), l'appareil (19) de desserte des rayonnages reçoit la cassette (12) devant être restockée, à partir de l'emplacement (1,2,3) situé sur le chariot de transport (25,25'), et que la cassette (12) à restocker est ensuite amenée, par l'appareil (19) de desserte des rayonnages, à l'emplacement de la cassette (12) qui a été déstockée auparavant.

2. Procédé selon la revendication 1, caractérisé en ce que lors du déplacement, utilisé pour le stockage, du chariot de transport (25,26'), les cassettes (12) sont transférées à un emplacement (2,3) pour cassette, qui est situé à côté de l'emplacement (1) équipé des moyens d'entraînement longitudinal (3), qu'à l'extrémité de ce déplacement, qui est déterminée par la position dans l'allée de la cassette (12) suivante à déstocker, cette cassette (12) suivante à déstocker est déposée à l'emplacement (1) pour cassette, qui comporte les moyens d'entraînement longitudinal (30), du chariot de transport (25,25') et qu'ensuite la cassette (12) à stocker est retirée du chariot de transport (25,25') et est introduite dans le casier de rayonnage qui a été libéré par la cassette (12) suivante à déstocker.

3. Procédé selon les revendications 1 et 2, caractérisé en ce que lors du déplacement, utilisé pour le stockage, du chariot de transport (25,25'), les cassettes (12) sont transférées à l'emplacement pour cassette (2 ou 3), qui est situé en arrière dans la direction de déplacement, lors du déplacement du chariot de transport (25,25'), qui intervient après la saisie de la cassette (11) suivante à déstocker, en direction du poste de déstockage (40).

4. Procédé selon l'une quelconque des revendications précédentes, caractérisé en ce que le prélèvement de la cassette (12) à stocker à partir du chariot de transport (25,25') s'effectue au début ou pendant le déplacement du chariot en direction du poste de déstockage (40).

5. Magasin à rayonnages (11) pour un matériau en forme de barres et de plaques, logé dans des cassettes auto-portantes, comportant
a) plusieurs rayonnages (13), qui sont disposés côte-à-côte en étant alignés transversalement par rapport à la direction longitudinale du matériau et sont séparés par des allées (14) et qui possèdent des bras de support (15), qui sont fixés d'une manière superposée sur les montants verticaux (17) des rayonnages, s'étendent horizontalement transversalement par rapport à la direction longitudinale du matériau, dans l'allée voisine (14) des rayonnages et servent à former des casiers de rayonnage pour les cassettes (12) et pour leur engagement dans les supports (16), qui font saillie frontalement, des cassettes (12), et
b) en outre un appareil (19) de desserte des rayonnages, qui est déplaçable au-dessus des rayonnages (13) ou latéralement par rapport à ces derniers et transversalement par rapport à la direction longitudinale des matériaux et qui peut s'engager frontalement au-dessous des supports (16) des cassettes (12) ou au moyen duquel les cassettes (12) peuvent être soulevées et abaissées transversalement par rapport aux allées (14) des rayonnages et dans ces allées, et
c) en outre un chariot de transport (25,25'), déplaçable au-dessous du casier le plus bas des rayonnages, transversalement par rapport à la direction longitudinale des matériaux et servant à loger au moins deux cassettes (12) disposées côte-à-côte,
d) ainsi qu'enfin au moins un poste de déstockage (40) qui est disposé, dans la direction longitudinal du matériau, entre les rayonnages (13), à hauteur du chariot de transport (25,25') et sert à recevoir simultanément deux cassettes (12) disposées côte-à-côte,
un emplacement (1) pour cassette dans le chariot de transport (25,25') ainsi que les deux emplacements (4,5) pour cassette dans le poste de déstockage étant agencés sous la forme de moyens horizontaux d'entraînement longitudinal (30,41,42), pouvant être actionnés dans la direction longitudinale du matériau, pour les cassettes (12), pour la mise en oeuvre du procédé selon les revendications 1 et 4 prises dans leur ensemble, caractérisé en ce que sur le chariot de transport (25,25') est disposé un dispositif de transfert (33 à 40'), qui est déplaçable transversalement par rapport à la direction longitudinale du matériau et sert à soulever et à transférer une cassette (12), située en un emplacement (1) pour cassette dans le chariot de transport (25,25'), en un autre emplacement (2 ou 3) pour cassette dans le chariot de transport (25,25').

6. Magasin à rayonnages selon la revendication 5, caractérisé en ce que le chariot de transport (25,25') possède respectivement un autre emplacement (2,3) pour cassette, des deux côtés de l'emplacement (1) pour cassette, équipé des moyens d'entraînement longitudinal (30).

7. Magasin à rayonnages selon la revendication 5 ou 6, caractérisé en ce que le chariot de transport (25, 25') possède un profil en projection horizontale sensiblement en forme de C ou en forme de T double, que la barre horizontale de ce profil en projection horizontale coïncide avec la disposition du moyen d'entraînement longitudinal (30), que les branches libres de ce profil en projection horizontale contiennent des barres horizontales (25') servant à former des positions (2,3) de cassettes, et que les chariots (34) sont déplaçables horizontalement le long des branches et entre ces dernières, d'une manière synchronisée les uns sur les autres (moyens d'entraînement 60 à 65).

8. Magasin à rayonnages selon la revendication 5, caractérisé en ce que le poste de déstockage (40) possède un dispositif de transfert (43 à 48), qui est déplaçable transversalement par rapport à la direction longitudinale du matériau et sert à soulever et à transférer une cassette (12), située en un emplacement (4,5) pour cassette du poste de déstockage, à l'autre emplacement pour cassette.

9. Magasin à rayonnages selon la revendication 5 ou 8, caractérisé en ce que le dispositif de transfert (33 à 40'; 43 à 48) possède des chariots (34) servant à loger une cassette (12) et qui sont déplaçables respectivement le long de rails extérieurs (33,43) du chariot de transport (25,25') ou du poste de déstockage (40), en étant associés aux deux extrémités longitudinales des cassettes (12).

10. Magasin à rayonnages selon la revendication 9, caractérisé en ce que chaque chariot (34) est relié à des mécanismes de roulement (36,44) déplaçables sur les rails extérieurs (33,43), par l'intermédiaire de montants verticaux (35,45) de longueur variable, et est réglable en hauteur par l'intermédiaire de mécanismes à cylindre et piston (37), qui sont articulés de manière à pouvoir pivoter d'une part sur le chariot et d'autre part dans la zone des mécanismes de roulement (36,44).

11. Magasin à rayonnages selon la revendication 9 où 10, caractérisé en ce que chaque chariot (34) possède des équerres d'appui (38,46), qui sont associées aux deux faces frontales d'une cassette (12) et servent à supporter et à ajuster longitudinalement et transversalement la cassette (12) et dont la branche horizontale (39,47) s engage au-dessous de la cassette, tandis que sa branche verticale (40',48) s'applique contre la paroi frontale ou la paroi latérale de la cassette.

12. Magasin à rayonnages selon la revendication 11, caractérisé en ce que la branche verticale (40',48) de la cornière de support (38,46) est inclinée ou biseautée, au niveau de son extrémité libre et s'écarte à partir de la paroi frontale ou de la paroi latérale de la cassette.

13. Magasin à rayonnages selon la revendication 5, caractérisé en ce qu'un casier le plus bas du rayonnage est agencé sous la forme d'un moyen d'entraînement longitudinal (56) réglable en hauteur et agissant dans la direction longitudinale du matériau, et ce en étant aligné, dans la direction longitudinale du matériau, avec l'un des moyens d'entraînement longitudinal (42) du poste de déstockage (40).
